# EUROPÄISCHE PATENTSCHRIFT

(11) **EP 3 759 802 B1**
(45) Veröffentlichungstag und Bekanntmachung des Hinweises auf die Patenterteilung: **09.10.2024**
(21) Anmeldenummer: 18708645.9
(22) Anmeldetag: 28.02.2018
(51) Int. Cl.: H02K 11/33, H02K 11/40, H02K 9/19, H02K 9/22

(54) **ELEKTRISCHES KFZ-NEBENAGGREGAT**
ELECTRIC MOTOR VEHICLE AUXILIARY UNIT
GROUPE AUXILIAIRE ÉLECTRIQUE DE VÉHICULE AUTOMOBILE

(43) Veröffentlichungstag der Anmeldung: 06.01.2021
(73) Patentinhaber: Pierburg Pump Technology GmbH, 41460 Neuss (DE)
(72) Erfinder: SCHULZ, Christian, 47239 Duisburg (DE); GROSS, Peter, 40699 Erkrath (DE)
(74) Vertreter: terpatent PartGmbB
(86) Internationale Anmeldenummer: PCT/EP2018/054902
(87) Internationale Veröffentlichungsnummer: WO 2019/166080

(56) Entgegenhaltungen:
- EP-A1- 2 500 576
- EP-A1- 2 725 691
- CN-A- 101 791 974
- GB-A- 2 445 775
- US-A1- 2016 248 292

## Beschreibung

Die Erfindung bezieht sich auf ein elektrisches Kfz-Nebenaggregat gemäß dem Oberbegriff des Hauptanspruches, beispielsweise auf eine elektrisch angetriebene Pumpe, insbesondere Flüssigkeits-Pumpe, auf ein elektrisches Ventil, eine elektrische Klappe oder andere elektrische Steller.

Die Vielzahl kleiner und größerer elektrischer Bauteile und Kfz-Nebenaggregate in einem Kraftfahrzeug stellt sehr hohe Anforderungen an die elektrische Entstörung der elektrischen Kfz-Nebenaggregate. Viele elektrische Nebenaggregate, insbesondere Pumpen, sind derart aufgebaut, dass eine Motorelektronik-Kammer, in der eine die Motorelektronik und insbesondere die Leistungselektronik zur Ansteuerung der Motorspulen aufweisende Motorelektronik-Platine angeordnet sind, an den elektrischen Antriebsmotor einschließlich der Motorspulen angrenzt. Der Antriebsmotor einschließlich der Motorspulen und die Motorelektronik-Kammer sind durch eine Trennwand voneinander getrennt.

Eine wichtige Maßnahme bei der elektrischen Entstörung ist ein guter und widerstandsarmer Massekontakt des elektrisch leitenden Gehäuses und der Schaltungsmasse auf der Motorelektronik-Platine miteinander und mit der elektrischen Fahrzeugmasse.

Aus EP 2 476 914 A1 ist ein als Kühlmittelpumpe ausgebildetes elektrisches Kfz-Nebenaggregat bekannt.

Aus EP 2 053 726 A2 ist ein mechanisch kommutierter Gleichstrommotor bekannt, bei dem die Motorbürsten über Entstördrosseln optional mit der Fahrzeugmasse bzw. der Fahrzeug-Batteriespannung verbunden sind.

Aus DE 19728291 ist ein dreiarmiger Masseverbinder zum elektrischen und mechanischen Verbinden einer Platine bzw. der Platinenmasse mit einem metallischen Gehäuse bekannt.

EP 2 187 718 offenbart eine elektrische Kühlmittelpumpe mit einer Motorelektronik-Platine, die mit ihrer nicht-bestückten Seite auf einer Trennwand fixiert ist.

US 5 982 253 A offenbart eine Entstörungsvorrichtung für einen elektronisch kommutierten Elektromotor mit einem elektrisch leitfähigen Gehäuse, wobei auf einer Entstörleiterplatte separate Kontaktinseln für Gehäusekontaktierung, Motoranschluss und Stromversorgung vorgesehen sind, die durch Filterelemente miteinander verbunden sind.

Ein gattungsgemäßes elektrisches Kfz-Nebenaggregat ist aus der europäischen Patentanmeldung EP 2 725 691 A1 bekannt, wobei die Motorelektronik-Platine zumindest einen Gehäusemasseanschluss aufweist, die über ein Gehäusemasseorgan unmittelbar mit dem Nebenaggregatgehäuse elektrisch leitend verbunden ist.

Darüber hinaus ist es aus der europäischen Patentanmeldung EP 2 500 576 A1 eine Heizungsumwälzpumpe bekannt, die ebenfalls ein mit einer Platine verbundenes Gehäusemasseorgan aufweist, das zudem mit einem Steckerpin eines Steckeranschlusses elektrisch verbunden ist.

Auch die US 2016/248292 A1 offenbart eine Flüssigkeitspumpe mit einem Gehäusemasseorgan und einem Fahrzeugmasseorgan.

All diese Ausführungen von Nebenaggregaten sind jedoch immer noch komplex im Aufbau und dadurch teuer in der Herstellung.

Aufgabe der Erfindung ist es, ein störungsfreies elektrisches Kfz-Nebenaggregat mit einem elektrischen Antriebsmotor zu schaffen, bei dem das Gehäusemasseorgan auf besonders einfache Weise ausgeführt ist und damit einfach und kostengünstig zu montieren ist.

Diese Aufgabe wird erfindungsgemäß dadurch gelöst, dass die Motorsteuerelektronik-Platine über einen Steckeranschluss mit einem Motorsteuergerät verbindbar ist, wobei der Steckeranschluss über eine Stanzkammanordnung mit mindestens zwei Steckerpins mit der Motorsteuerelektronik-Platine elektrisch verbunden ist, wobei ein Fahrzeugmasseorgan vorgesehen ist, das über die Stanzkammanordnung mit dem Motorsteuergerät verbindbar ist. wobei das Gehäusemasseorgan als Steckerpin der Stanzkammanordnung ausgeführt ist, wobei ausgehend von der Motorsteuerelektronik-Platine ein gemeinsames Steckerpinteilstück für das Gehäusemasseorgan und das Fahrzeugmasseorgan vorgesehen ist, wobei ein freies Ende des Steckerpins in eine Aussparung eines elektrisch leitenden Gehäuseteils des Nebenaggregat-Gehäuses eingeführt ist. Die Masseanbindung kann somit direkt und schnell hergestellt werden. Aufgrund einer kurzen und niederohmigen Masseanbindung kann eine EMV-Verbesserung realisiert werden. Auch wird die elektromagnetische Abschirmung des Gehäuses noch einmal verbessert. Aufgrund des Verzichts von Schrauben zur Masseanbindung können Bauteile reduziert und der Fertigungsprozeß verkürzt werden. Zudem kann auf das Einschrauben als Montageschritt verzichtet werden, was neben einer Zeitersparnis aufgrund des Wegfalls von Spänen zu einer erhöhten Sauberkeit führt. Der Wegfall von Schrauben führt zudem zu einer Platzeinsparung auf der Platine.

Das elektrische Kfz-Nebenaggregat kann vorliegend grundsätzlich jeder Typ von Nebenaggregat sein, beispielsweise ein elektrisches Ventil, eine elektrische Klappe oder ein anderer elektrischer Steller, oder aber eine Fluidpumpe, insbesondere eine Flüssigkeitspumpe, insbesondere eine Schmiermittelpumpe, eine Kühlmittelpumpe oder eine Kraftstoffpumpe. Der Antriebsmotor kann als Trockenläufer, im Falle einer Flüssigkeitspumpe, jedoch insbesondere auch als Nassläufer ausgebildet sein.

Das elektrische Kfz-Nebenaggregat weist einen elektrischen Antriebsmotor mit mehreren Motorspulen, eine durch den Antriebsmotor angetriebene Aggregatmechanik und eine Motorelektronik-Platine mit einer Motorelektronik zum Ansteuern des Antriebsmotors auf. Unter der Aggregatmechanik ist vorliegend die gesamte Aggregatmimik zu verstehen, also beispielsweise ein Getriebe im Falle eines Stellers, ein Pumpenrotor und Pumpenstator im Falle einer Pumpe et cetera.

Ferner ist zumindest ein Teil des Nebenaggregat-Gehäuses elektrisch leitend, so dass der Antriebsmotor und die auf der Motorelektronik-Platine angeordnete Steuerungs- und Leistungselektronik elektrisch abgeschirmt werden.

In besonders vorteilhafter Weise ist die Stanzkammanordnung kunststoffumspritzt, wodurch die Montage noch einmal vereinfacht werden kann.

Vorzugsweise ist die Stanzkammanordnung ausgehend von der Motorsteuerelektronik-Platine ungefähr radial nach außen gerichtet. Hierbei wird von einem ungefähr zylindrisch ausgebildeten Gehäuse ausgegangen, das eine Längsachse aufweist, um die sich der Antriebsmotor dreht. Die radiale Anordnung der Masseanschluss-Leitung stellt die kürzest mögliche Verbindung nach außen, und damit zu der fahrzeugseitigen Fahrzeugmasse dar.

Vorzugsweise ist in dem Nebenaggregat-Gehäuse eine elektrisch leitende Trennwand angeordnet, die elektrisch mit dem elektrisch leitenden Gehäuse verbunden ist. Die Trennwand trennt eine Motorelektronik-Kammer, in der die Motorelektronik-Platine mit der Motorelektronik angeordnet ist, von dem Antriebsmotor und/oder der Aggregatmechanik. Die Trennwand stellt eine weitere Abschirmung dar, die beispielsweise unmittelbar an die Motorelektronik-Platine angrenzt und auf diese Weise eine besonders wirkungsvolle elektromagnetische Abschirmung darstellt.

Vorzugsweise ist die Aggregatmechanik eine Flüssigkeitspumpe mit einem Pumpenrotor und einem Pumpenstator, wobei die Trennwand durch die Flüssigkeit, die von der Flüssigkeitspumpe gepumpt wird, unmittelbar gekühlt wird. Dies kann konstruktiv dadurch erreicht werden, dass die Flüssigkeitspumpe unmittelbar angrenzt an die Trennwand, so dass die Flüssigkeit die Trennwand ständig umspült und mit einer hohen Kühlleistung kühlt. Alternativ kann der Antriebsmotor an die Trennwand angrenzen, wobei der Motorrotor als Nassläufer ausgebildet ist. Die den Motorrotor umgebende Flüssigkeit spült und kühlt auf diese Weise auch unmittelbar die Trennwand.

Die Motorelektronik auf der Motorelektronik-Platine weist zum Ansteuern der Motorspulen Leistungshalbleiter auf, die, je nach Bauart, eine Eigentemperatur von 120-150 °C nicht überschreiten dürfen, da sie oberhalb dieser Temperatur zerstört werden. Da die Motorelektronik in der Regel in einer hermetisch geschlossenen Motorelektronik-Kammer sitzt, um eine gute elektromagnetische Verträglichkeit sicherzustellen und um die Motorelektronik gegen äußere Einflüsse zu schützen, ist eine Kühlung über das ausschließlich luftgekühlte Gehäuse nur begrenzt möglich. Durch das Spülen einer Trennwand-Seite mit der Pumpenflüssigkeit wird die Kühlleistung erheblich erhöht.

Besonders bevorzugt ist die Motorelektronik-Platine über eine elektrisch nicht-leitende Wärmeleitschicht mit einer definierten konstanten Dicke D mit der Trennwand verbunden. Die Wärmeleitschicht kann von einer Wärmeleitpaste gebildet werden, kann aber auch von einem Wärmeleitkleber gebildet werden, der die Motorelektronik-Platine auf der Trennwand bleibend fixiert.

Im Folgenden wird unter Bezugnahme auf die Zeichnungen ein Ausführungsbeispiel der Erfindung näher erläutert. Es zeigen:
Figur 1 einen schematischen Längsschnitt eines elektrischen Kfz-Nebenaggregats einschließlich einer Motorelektronik-Platine, und
Figur 2 eine perspektivische Ansichtt der Motorelektronik-Platine des elektrischen Kfz-Nebenaggregats der Figur 1 ohne Trennwand.

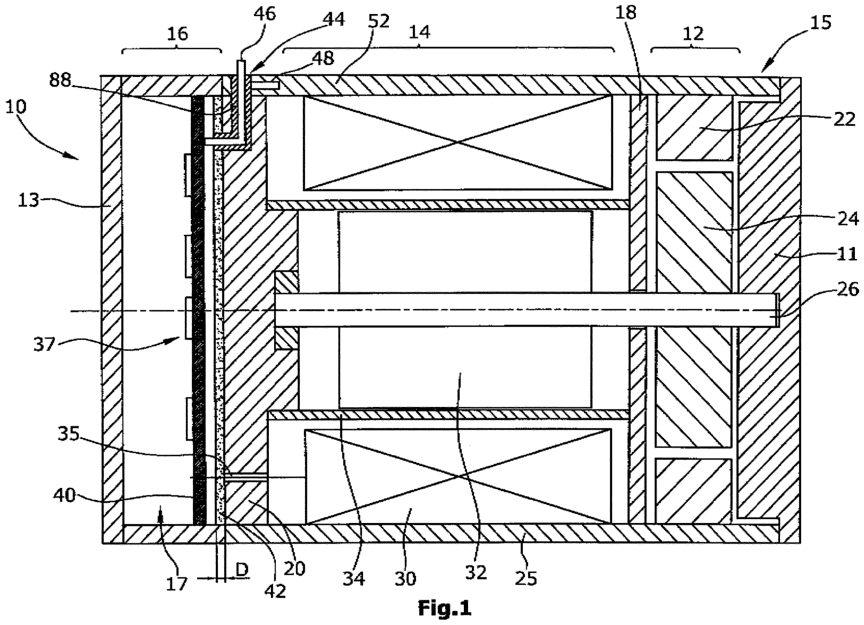

In der Figur 1 ist eine schematische Ansicht eines elektrischen Kfz-Nebenaggregat 10, das vorliegend als elektrische Kühlmittelpumpe ausgebildet ist. Grundsätzlich kann das elektrische Kfz-Nebenaggregat aber auch als elektrische Pumpe anderen Typs ausgebildet sein, als ein elektrisches Ventil, eine elektrische Klappe oder als ein anderer Nebenaggregat-Typ ausgebildet sein.

Das vorliegende elektrische Kfz-Nebenaggregat 10 ist, in Längsrichtung gesehen, aufgeteilt in die Bereiche Aggregatmechanik 12, die vorliegend einen Pumpenrotor 24 und einen Pumpenstator 22 aufweist, elektrischer Antriebsmotor 14, der im Wesentlichen von mehreren statorseitigen Motorspulen 30 und einem permanent erregten Motorrotor 32 gebildet wird, und einen Motorelektronik-Abschnitt 16. In dem Motorelektronik-Abschnitt 16 ist eine Motorelektronik-Kammer 17 vorgesehen, in der eine Motorelektronik-Platine 40 angeordnet ist. Die Motorelektronik-Platine 40 weist eine Steuerungs- und Leistungselektronik 37 zum Steuern und Regeln des Antriebsmotors 14 und insbesondere zum Ansteuern der Motorspulen 30 auf. Die Motorspulen 30 sind über mehrere Verbindungsleitungen 35 mit der Motorelektronik-Platine 40 elektrisch verbunden.

Der Pumpenrotor 24 und der Motorrotor 32 sitzen auf einer Rotorwelle 26. Der Antriebsmotor 14 weist ein zylindrisches Spaltrohr 34 auf, das den Nassbereich, in dem der Motorrotor 32 angeordnet ist, trennt von dem ringförmigen Trockenbereich, in dem die Motorspulen 30 angeordnet sind. Der Antriebsmotor 14 ist also als sogenannter Spaltrohrmotor bzw. als Nassläufer ausgebildet.

Das Kfz-Nebenaggregat 10 weist ein Gehäuse 15 auf, dass im Wesentlichen von einem zylindrischen Gehäusezylinder 25, einem pumpenseitigen Gehäusedeckel 11 und einem elektronikseitigen Gehäusedeckel 13 gebildet wird. Innerhalb des Gehäuses 15 ist eine interne Trennwand 18 vorgesehen, die in einer Querebene steht und den Pumpenraum der Aggregatmechanik 12 gegenüber dem Antriebsmotor 14 weitgehend abschließt. Allerdings kann die von der Aggregatmechanik 12 gepumpte Flüssigkeit auch in den Nassraum hinein- und aus diesem wieder herausfließen. Ferner ist innerhalb des Nebenaggregat-Gehäuses 15 eine weitere in einer Querebene liegende Trennwand 20 angeordnet, die die Motorelektronik-Kammer 16 hermetisch von dem Antriebsmotor 14 trennt. Alle Teile des Gehäuses 15 sowie die Trennwand 20 sind aus elektrisch leitendem Metall hergestellt, beispielsweise aus Aluminium.

Die Motorelektronik-Platine 40 ist mit einer Wärmeleitschicht 42, die als Wärmeleitkleber ausgebildet ist, in einer definierten konstanten Dicke D beanstandet zu mit der Trennwand 20 wärmeleitend verklebt.

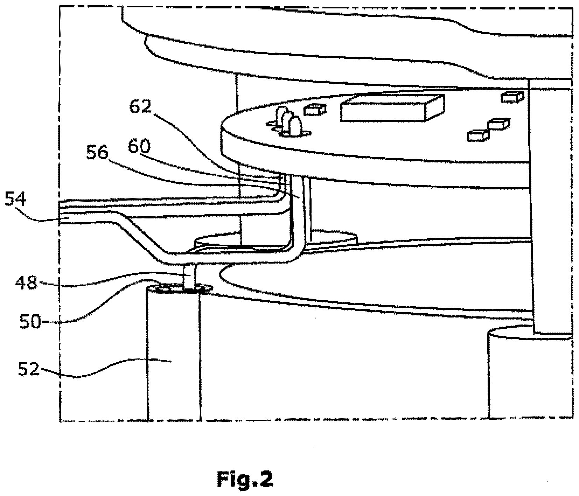

Mit 44 ist eine Stanzkammanordnung bezeichnet, die Motorsteuerelektronik-Platine 40 über eine Steckeranschluss 46 mit einem nicht weiter dargestellten Motorsteuergerät verbindet. Erfindungsgemäß ist nun vorgesehen, dass ein Steckerpin 48 der Stanzkammanordung 44 als Gehäusemasseorgan ausgeführt ist und mit seinem freien Ende in eine Aussparung 50 eines elektrisch leitenden Gehäuseteils 52 des Nebenaggregat-Gehäuses 15 eingeführt ist (siehe hierzu insbesondere auch Figur 2). Grundsätzlich ist hierbei die Stanzkammanordnung 44 ausgehend von der Motorsteuerelektronik-Platine 40 radial nach außen gerichtet. Die Stanzkammanordnung 44 ist hierbei in vorteilhafter Weise mit einem Kunststoffelement 58 umspritzt.

Figur 2 zeigt nun eine perspektivische Ansicht der Motorelektronik-Platine 40 des elektrischen Kfz-Nebenaggregats 10 der Figur 1 zur Verdeutlichung der Stanzkammanordnung 44 ohne Trennwand 20. Zusätzlich zum Gehäusemasseorgan 48 ist ein Fahrzeugmasseorgan 54 vorgesehen, das über die Stanzkammanordnung 44 mit dem Motorsteuergerät verbindbar ist. Hierdurch kann die elektromagnetische Abschirmung noch einmal verbessert werden. Ausgehend von der Motorsteuerelektronik-Platine 40 ist ein gemeinsames Steckerpinteilstück 56 für das Gehäusemasseorgan 48 und das Fahrzeugmasseorgan 54 vorgesehen. Wie aus Figur 2 ersichtlich sind noch weitere Steckerpins 60, 62 zur Ansteuerung der Motorsteuerelektronik-Platine 40 vorgesehen.

## Patentansprüche

1. Elektrisches Kfz-Nebenaggregat (10) mit einem zumindest teilweise elektrisch leitend ausgebildeten Nebenaggregat-Gehäuse (15), in dem ein elektrischer Antriebsmotor (14) mit statorseitigen Motorspulen (30), eine durch den Antriebsmotor (14) angetriebene Aggregatmechanik (12), eine Motorelektronik-Platine (40) mit einer eine Steuerungs- und Leistungselektronik (37) aufweisenden Motorelektronik zum Steuern des Antriebsmotors (14), vorgesehen sind, wobei die Motorelektronik-Platine (40) zumindest einen Gehäusemasseanschluss (48, 56) aufweist, die über ein Gehäusemasseorgan (48) unmittelbar mit dem Nebenaggregatgehäuse (15) elektrisch leitend verbunden ist, **dadurch gekennzeichnet, dass** die Motorsteuerelektronik-Platine (40) über einen Steckeranschluss (46) mit einem Motorsteuergerät verbindbar ist, wobei der Steckeranschluss (46) über eine Stanzkammanordnung (44) mit mindestens zwei Steckerpins (48, 54, 60, 62) mit der Motorsteuerelektronik-Platine (40) elektrisch verbunden ist, wobei ein Fahrzeugmasseorgan (54) vorgesehen ist, das über die Stanzkammanordnung (44) mit dem Motorsteuergerät verbindbar ist, wobei das Gehäusemasseorgan als Steckerpin (48) der Stanzkammanordnung (44) ausgeführt ist, wobei ausgehend von der Motorsteuerelektronik-Platine (40) ein gemeinsames Steckerpinteilstück (56) für das Gehäusemasseorgan (48) und das Fahrzeugmasseorgan (54) vorgesehen ist, wobei ein freies Ende des Steckerpins (48) in eine Aussparung (50) eines elektrisch leitenden Gehäuseteils (52) des Nebenaggregat-Gehäuses (15) eingeführt ist.

2. Elektrisches Kfz-Nebenaggregat nach Anspruch 1, **dadurch gekennzeichnet, dass** die Stanzkammanordnung (44) kunststoffumspritzt ist.

3. Elektrisches Kfz-Nebenaggregat nach einem der Ansprüche 1 oder 2, **dadurch gekennzeichnet, dass** die Stanzkammanordnung (44) ausgehend von der Motorsteuerelektronik-Platine (40) ungefähr radial nach außen gerichtet ist.

4. Elektrisches Kfz-Nebenaggregat (10) nach einem der Ansprüche 1 - 3, **dadurch gekennzeichnet, dass** in dem Nebenaggregat-Gehäuse (15) eine mit dem Gehäuse (15) elektrisch verbundene und elektrisch leitende Trennwand (20) angeordnet ist, die eine Motorelektronik-Kammer (17) von dem Antriebsmotor (14) und/oder der Aggregatmechanik (12) trennt.

5. Elektrisches Kfz-Nebenaggregat (10) nach Anspruch 4, wobei die Aggregatsmechanik (12) eine Flüssigkeitspumpe mit einem Pumpenrotor (24) und einem Pumpenstator (22) ist, wobei die Trennwand (20) durch die Flüssigkeit, die von der Flüssigkeitspumpe gepumpt wird, unmittelbar gekühlt wird.

6. Elektrisches Kfz-Nebenaggregat (10) nach Anspruch 4 oder 5, wobei zwischen der Motorelektronik-Platine (40) und der Trennwand (20) eine elektrisch nicht-leitende Wärmeleitschicht (42) in einer definierten Dicke D vorgesehen ist.

## Claims

1. Electric motor vehicle auxiliary unit (10) with an at least partially electrically conductive auxiliary unit housing (15), in which there are provided an electric drive motor (14) with motor coils (30) on the stator side, a unit mechanics (12) driven by the drive motor (14), a motor electronics circuit board (40) with motor electronics having control and power electronics (37) for controlling the drive motor (14), wherein the motor electronics circuit board (40) comprises at least one housing ground connection (48, 56), which is directly electrically conductively connected to the auxiliary unit housing (15) via a housing ground member (48), **characterized in that** the motor control electronics circuit board (40) can be connected to a motor control unit via a plug connection (46), wherein the plug connection (46) is electrically connected to the motor control electronics circuit board (40) via a punched comb arrangement (44) with at least two plug pins (48, 54, 60, 62), wherein a vehicle ground member (54) is provided, which can be connected to the motor control unit via the punched comb arrangement (44), wherein the housing ground member is realized as a connector pin (48) of the punched comb arrangement (44), wherein starting from the motor control electronics circuit board (40), a common connector pin section (56) is provided for the housing ground member (48) and the vehicle ground member (54), wherein a free end of the plug pin (48) is inserted into an opening (50) of an electrically conductive housing part (52) of the auxiliary unit housing (15).

2. Electric motor vehicle auxiliary unit according to claim 1, **characterized in that** the punched comb arrangement (44) is overmoulded with plastic.

3. Electric motor vehicle auxiliary unit according to one of claims 1 or 2, **characterized in that** the punched comb arrangement (44) is directed approximately radially outwards starting from the motor control electronics circuit board (40).

4. Electric motor vehicle auxiliary unit (10) according to one of claims 1 - 3, **characterized in that** an electrically conductive separating wall (20), which is electrically connected to the housing (15) and separates a motor electronics chamber (17) from the drive motor (14) and/or the unit mechanics (12), is arranged in the auxiliary unit housing (15).

5. Electric motor vehicle auxiliary unit (10) according to claim 4, wherein the unit mechanics (12) is a liquid pump with a pump rotor (24) and a pump stator (22), wherein the separating wall (20) is directly cooled by the liquid pumped by the liquid pump.

6. Electrical motor vehicle auxiliary unit (10) according to claim 4 or 5, wherein an electrically non-conductive heat-conducting layer (42) having a defined thickness D is provided between the motor electronics circuit board (40) and the separating wall (20).

## Revendications

1. Appareil auxiliaire électrique pour véhicule automobile (10) avec un boîtier d'appareil auxiliaire (15) conçu au moins partiellement de manière à conduire l'électricité, dans lequel se trouvent un moteur d'entraînement électrique (14) avec des bobines de moteur (30) côté stator, un mécanisme d'appareil (12) entraîné par le moteur d'entraînement (14), une platine électronique de moteur (40) avec une électronique de moteur comprenant une électronique de commande et de puissance (37) pour la commande du moteur d'entraînement (14), la platine électronique de moteur (40) comprenant au moins une connexion de masse de boîtier (48, 56) qui est reliée de manière électriquement conductrice directement au boîtier d'appareil auxiliaire (15) via un organe de masse de boîtier (48), **caractérisé en ce que** la platine électronique de commande de moteur (40) peut être reliée à un appareil de commande de moteur par l'intermédiaire d'un connecteur (46), le connecteur (46) étant relié électriquement à la platine électronique de commande de moteur (40) par l'intermédiaire d'un agencement de peigne de poinçonnage (44) avec au moins deux pins de connecteur (48, 54, 60, 62), un organe de masse de véhicule (54) étant prévu, lequel peut être relié à l'appareil de commande de moteur par l'intermédiaire de l'agencement de peigne de poinçonnage (44), l'organe de masse du boîtier étant réalisé sous la forme d'une pin de connecteur (48) de l'agencement de peigne de poinçonnage (44), une pièce de pin de connecteur (56) commune à l'organe de masse du boîtier (48) et à l'organe de masse du véhicule (54) étant prévue en partant de la platine électronique de commande du moteur (40), une extrémité libre de la pin de connecteur (48) étant introduite dans un évidement (50) d'une partie de boîtier (52) électriquement conductrice du boîtier d'appareil auxiliaire (15).

2. Appareil auxiliaire électrique pour véhicule automobile selon la revendication 1, **caractérisé en ce que** l'agencement de peigne de poinçonnage (44) est surmoulé en matière plastique.

3. Appareil auxiliaire électrique pour véhicule automobile selon l'une des revendications 1 ou 2, **caractérisé en ce que** l'agencement de peigne de poinçonnage (44) est orienté approximativement radialement vers l'extérieur à partir de la platine électronique de commande moteur (40).

4. Appareil auxiliaire électrique pour véhicule automobile (10) selon l'une des revendications 1 à 3, **caractérisé en ce que** dans le boîtier d'appareil auxiliaire (15) est disposée une paroi de séparation (20) reliée électriquement au boîtier (15) et conductrice de l'électricité, qui sépare une chambre d'électronique moteur (17) du moteur d'entraînement (14) et/ou de du mécanisme de l'appareil (12).

5. Appareil auxiliaire électrique pour véhicule automobile (10) selon la revendication 4, dans lequel le mécanisme de l'appareil (12) est une pompe à liquide avec un rotor de pompe (24) et un stator de pompe (22), la paroi de séparation (20) étant directement réfrigérée par le liquide pompé par la pompe à liquide.

6. Appareil auxiliaire électrique pour véhicule automobile (10) selon la revendication 4 ou 5, dans lequel il est prévu entre la platine électronique du moteur (40) et la paroi de séparation (20) une couche conductrice de chaleur (42) non conductrice de l'électricité d'une épaisseur D définie.
